# EUROPÄISCHE PATENTANMELDUNG

(11) **EP 3 919 208 A1**
(43) Veröffentlichungstag der Anmeldung: **08.12.2021**
(21) Anmeldenummer: 20177841.2
(22) Anmeldetag: 02.06.2020
(51) Int. Cl.: B23B 51/04, B28D 1/04, B28D 7/00

(54) **BOHRSYSTEM, DAS EIN KERNBOHRGERÄT UND EINE VORSCHUBVORRICHTUNG UMFASST, UND VERFAHREN ZUR ERKENNUNG UND BESEITIGUNG EINER BLOCKADE EINER BOHRKRONE**

(71) Anmelder: Hilti Aktiengesellschaft, 9494 Schaan (LI)
(72) Erfinder: Sattler, Christian, 87640 Biessenhofen (DE)
(74) Vertreter: Hilti Aktiengesellschaft Corporate Intellectual Property

(57) **Zusammenfassung**

Die vorliegende Erfindung betrifft ein Bohrsystem, das ein Kernbohrgerät mit einer Bohrkrone als Werkzeug zum Erzeugen eines Bohrlochs und eine Vorschubvorrichtung umfasst. In einem zweiten Aspekt betrifft die Erfindung ein Verfahren zur Erkennung und Beseitigung einer Blockade einer Bohrkrone eines Kernbohrgeräts, wobei das Kernbohrgerät mit einer Vorschubvorrichtung zusammen das vorgeschlagene Bohrsystem bildet. Bei dem Verfahren werden Systemparameter ausgewertet, um eine Blockade der Bohrkrone zu erkennen. Ferner kann die Blockade der Bohrkrone dadurch beseitigt werden, dass die Bohrkrone aus dem Bohrloch heraus- bzw. in das Bohrloch hineinbewegt wird und/oder dadurch, dass eine Drehrichtung der Bohrkrone geändert werden kann.

## Beschreibung

Die vorliegende Erfindung betrifft ein Bohrsystem, das ein Kernbohrgerät mit einer Bohrkrone als Werkzeug zum Erzeugen eines Bohrlochs und eine Vorschubvorrichtung umfasst. In einem zweiten Aspekt betrifft die Erfindung ein Verfahren zur Erkennung und Beseitigung einer Blockade einer Bohrkrone eines Kernbohrgeräts, wobei das Kernbohrgerät zusammen mit einer Vorschubvorrichtung das vorgeschlagene Bohrsystem bildet. Bei dem Verfahren werden Systemparameter ausgewertet, um eine Blockade der Bohrkrone zu erkennen. Ferner kann die Blockade der Bohrkrone dadurch beseitigt werden, dass die Bohrkrone aus dem Bohrloch heraus- bzw. in das Bohrloch hineinbewegt wird und/oder dadurch, dass eine Drehrichtung der Bohrkrone geändert wird.

### Hintergrund der Erfindung:

Es ist im Stand der Technik bekannt, dass Kernbohrgeräte zusammen mit einer Vorschubvorrichtung betrieben werden können, wobei die Vorschubvorrichtung dazu vorgesehen ist, das Kernbohrgerät bzw. die Bohrkrone des Kernbohrgeräts in den zu bearbeitenden Untergrund hineinzutreiben. Beim Betrieb eines solchen Kernbohrgeräts kann es durch loses oder gelöstes Material im zu bearbeitenden Untergrund immer wieder zu Blockierungen der Drehbewegung der Bohrkrone kommen. Häufig ist eine Entlastung des Bohr-Vorschubs ausreichend, um die Bohrkrone zu lösen und den Bohrprozess fortzuführen. In einigen Fällen ist dies aber nicht ausreichend. Die bisher üblicherweise angewendeten Methoden, um die verkantete Bohrkrone aus der Blockadesituation zu lösen, führen häufig zu unbefriedigenden Ergebnissen oder zu Beschädigungen an der Bohrkrone. Dies kann beispielsweise bei einem mechanischen Rütteln an der Bohrkrone der Fall sein. Wird ein Kernbohrgerät mit einer automatischen Bohrvorschubvorrichtung betrieben, so kann zwar auch bisher schon eine Blockade der Bohrkrone erkannt werden. Bisher kann aber lediglich versucht werden, die Blockade mit einer Entlastung des Vorschubs zu beseitigen.

Die Aufgabe, die der vorliegenden Erfindung zugrunde liegt, besteht somit darin, die vorstehend beschriebenen Mängel und Nachteile des Standes der Technik zu überwinden und ein Bohrsystem bereitzustellen, bei dem eine Blockade der Bohrkrone zunächst sicher erkannt und anschließend durch geeignete Maßnahmen besonders wirksam beseitigt werden kann. Ferner ist es Aufgabe der Erfindung, ein Verfahren bereitzustellen, mit dem eine Blockade einer Bohrkrone eines Kernbohrgeräts sowohl erkannt, als auch effektiv beseitigt werden kann. Darüber hinaus wäre es wünschenswert, wenn das Lösen der Bohrkrone werkzeuglos erfolgen könnte, so dass der Anwender des Kernbohrgeräts keine speziellen Werkzeuge zum Drehen oder Herausziehen der Bohrkrone mit sich führen muss.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Bohrsystem vorgesehen, das ein Kernbohrgerät mit einer Bohrkrone als Werkzeug zum Erzeugen eines Bohrlochs und eine Vorschubvorrichtung umfasst. Das Bohrsystem ist dadurch gekennzeichnet, dass es Mittel zur Erfassung von Systemparametern umfasst, wobei das Bohrsystem ferner Mittel zur Auswertung der Systemparameter umfasst, so dass die Systemparameter zur Erkennung einer Blockade der Bohrkrone verwendbar sind, wobei eine Blockade der Bohrkrone durch eine oder mehrere der folgenden Maßnahmen beseitigt werden kann:
a) Herausziehen der Bohrkrone aus dem Bohrloch unter Aufbringung einer Auszugskraft durch die Vorschubvorrichtung,
b) Änderung einer Drehrichtung der Bohrkrone.

In einem zweiten Aspekt betrifft die Erfindung ein Verfahren zur Erkennung und Beseitigung einer Blockade einer Bohrkrone eines Kernbohrgeräts, wobei das Kernbohrgerät eine Vorschubvorrichtung umfasst. Das Verfahren ist durch folgende Verfahrensschritte gekennzeichnet:
a) Erfassen von Systemparametern, wobei die Systemparameter einen Betrieb der Komponenten des Bohrsystems beschreiben,
b) Erkennen der Blockade der Bohrkrone durch Auswertung der Systemparameter,
c) Beseitigung der Blockade der Bohrkrone durch eine oder mehrere der folgenden Maßnahmen:
   1) Herausziehen der Bohrkrone aus dem Bohrloch unter Aufbringung einer Auszugskraft durch die Vorschubvorrichtung,
   2) Änderung einer Drehrichtung der Bohrkrone.

Die für das Bohrsystem eingeführten Begriffe, Definitionen und technischen Vorteile gelten vorzugsweise für das vorgeschlagene Verfahren analog, und umgekehrt. Es ist im Sinne der Erfindung bevorzugt, dass das Kernbohrgerät zusammen mit der Vorschubvorrichtung ein vorgeschlagenes Bohrsystem bildet. Es ist im Sinne der Erfindung ferner bevorzugt, dass das Erfassen der Systemparameter mit einer geeigneten Sensorik erfolgt. Dabei kann es sich beispielsweise um die Mittel zur Erfassung von Systemparametern handeln. Diese sind vorzugsweise Bestandteil des Kernbohrgeräts und/oder der Vorschubvorrichtung. Die Erfassungsmittel können beispielsweise Sensoren oder andere geeignete Messwertaufnehmer sein. Die Systemparameter beschreiben einen Betrieb der Komponenten des Bohrsystems, d.h. es handelt sich beispielsweise um Betriebsparameter, wie die Anzahl der Drehungen der Bohrkrone pro Zeiteinheit, den Stromfluss am Motor des Kernbohrgeräts, den Bohrvorschub, die Vorschubkraft, mit der die Vorschubvorrichtung die Bohrkrone in den zu bearbeitenden Untergrund hineintreibt oder die Auszugskraft, mit der die Vorschubeinrichtung die Bohrkrone aus dem Bohrloch herauszieht. Die Systemparameter können insbesondere zur Erkennung einer Blockade der Bohrkrone verwendet werden.

Es ist im Sinne der Erfindung bevorzugt, dass im Kontext der vorliegenden Erfindung eine Drehzahl des Motors des Kernbohrgeräts und eine Drehzahl des Getriebes am Bohrgerät ermittelt werden. Die ermittelten Werte können anschließend informationstechnologisch weiterverarbeitet werden. Insbesondere kann festgestellt werden, ob die ermittelten Drehzahlen den Wert «null» annehmen. Wenn dies der Fall ist und darüber hinaus eine Stromaufnahme am Bohrgerät ungleich «null» ist, spricht dies dafür, dass eine Blockade der Bohrkrone vorliegt, wobei in diesem Fall eine Rutschkupplung des Kernbohrgeräts nicht ausgelöst hat. Wenn eine Drehzahl des Motors dahingegen ungleich «null» ist, spricht dies dafür, dass die Rutschkupplung des Kernbohrgeräts ausgelöst hat. Mit anderen Worten: wenn die Drehzahlen an einem Motor des Kernbohrgeräts und an einem Getriebe des Kernbohrgeräts einen Wert «null» annehmen und die Stromaufnahme am Bohrgerät nicht den Wert «null» annimmt, wird im Kontext der vorliegenden Erfindung angenommen, dass eine Blockade der Bohrkrone ohne Rutschkupplungsauslösung vorliegt. Wenn die Drehzahl des Motors dahingegen nicht den Wert «null» annimmt, wird angenommen, dass eine Rutschkupplungsauslösung stattgefunden hat.

Im Sinne der Erfindung wird eine «Blockade der Bohrkrone» bevorzugt dann angenommen, wenn eine Drehbewegung der Bohrkrone im Wesentlichen nicht möglich ist. Dies bedeutet im Sinne der Erfindung bevorzugt, dass die Bohrkrone im Bohrloch oder in dem zu bearbeitenden Untergrund so verkantet oder verkeilt ist, dass eine Fortsetzung des Bohrprozesses nicht möglich ist, ohne eine Beschädigung der Bohrkrone und/oder des Kernbohrgeräts zu riskieren. Außerdem kann es einen hohen Aufwand für den Nutzer des Kernbohrgeräts bedeuten, die Bohrkrone wieder frei zu bekommen.

Ein besonderer Vorteil der Erfindung besteht darin, dass geeignete Maßnahmen vorgeschlagene werden, mit denen eine blockierende Bohrkrone besonders wirksam und effizient aus einem Untergrund gelöst werden kann, damit eine gewünschte Drehbewegung zum Bohren wieder ermöglicht werden kann. Insbesondere bestehen die geeigneten Massnahmen in dem Herausziehen der Bohrkrone aus dem Bohrloch und in einer Änderung der Drehrichtung der Bohrkrone. Vorteilhafterweise kann der Anwender durch geeignete Maßnahmen, wie Ausschalten des Bohrantriebes, Aufbringen einer hohen Auszugskraft, die entgegen der Vorschubkraft beim Bohren wirkt, oder Drehung der Bohrkronen entgegen der Drehbewegung des Bohrantriebes, die Bohrkrone im Untergrund lösen.

Es ist im Sinne der Erfindung besonders bevorzugt, dass es sich bei dem Krenbohrgerät um ein Diamantkernbohrgerät handelt, bei den die Bohrkrone mit vorzugsweise künstlichen Diamanten besetzt sein kann.

Das vorgeschlagene Verfahren bzw. das vorgeschlagene Bohrsystem ermöglichen es vorteilhafterweise, eine solche Blockade der Bohrkrone durch eine Auswertung der Systemparameter zu erkennen. Vorzugsweise ist das vorgeschlagenen Bohrsystem dazu eingerichtet, Betriebs- oder Systemparameter so auszuwerten, dass eine Erkennung einer Bohrkronenblockade ermöglicht wird. Die Betriebs- oder Systemparameter werden dabei vorzugsweise von Sensoren bereitgestellt, die Bestandteil des vorgeschlagenen Bohrsystems sein können. Die Auswertung der Betriebs- oder Systemparameter erfolgt vorzugsweise durch die Mittel zur Auswertung des Kernbohrgeräts. Dabei kann es sich zum Beispiel um eine Steuereinrichtung des Bohrgeräts handeln.

Wenn eine Blockade der Bohrkrone erkannt wird, kann mit dem Verfahren bzw. mit dem System Abhilfe geschaffen werden, indem die Blockade der Bohrkrone durch mindestens eine der folgenden Aktionen beseitigt bzw. behoben wird. Es kann die Bohrkrone aus dem Bohrloch herausgezogen werden und/oder es kann die Drehrichtung der Bohrkrone geändert werden. Vorzugsweise kann eine der beiden Massnahmen ausreichen, um das Verkanten der Bohrkrone im Bohrloch zu beenden. Es kann aber im Sinne der Erfindung ebenso bevorzugt sein, dass beide Massnahmen erforderlich sind, um die Blockade der Bohrkrone zu lösen. Das Herausziehen der Bohrkrone aus dem Bohrloch erfolgt insbesondere unter Aufbringung einer Auszugskraft durch die Vorschubvorrichtung. Mit anderen Worten ist die Vorschubvorrichtung dazu eingerichtet, die Bohrkrone aus dem Bohrloch herauszuziehen. Dazu kann die Vorschubeinrichtung eine Auszugskraft auf die Bohrkrone auf- bzw. anwenden, so dass die Bohrkrone aus dem Bohrloch herausfährt bzw. herausgefahren wird. Die Änderung der Drehrichtung der Bohrkrone kann beispielsweise durch den Motor des Kernbohrgeräts bewirkt werden, vorzugsweise durch ein Zusammenwirken mit einer Steuereinrichtung des Kernbohrgeräts. Der Begriff «Änderung der Drehrichtung der Bohrkrone» bedeutet im Sinne der Erfindung bevorzugt, dass sich eine Bohrkrone des Kernbohrgeräts, die sich zunächst beispielsweise im Uhrzeigersinn gedreht hat, nach der Drehrichtungs-Änderung gegen den Uhrzeigersinn dreht. Analog kann sich eine Bohrkrone, die sich zunächst gegen den Uhrzeigersinn gedreht hat, nach einer Änderung der BohrkronenDrehrichtung im Uhrzeigersinn drehen.

In einer bevorzugten Ausgestaltung der Erfindung können das Herausziehen der Bohrkrone und die Änderung der Drehrichtung der Bohrkrone zur Beseitigung der Blockade der Bohrkrone im Wesentlichen abwechselnd ausgeführt werden. Selbstverständlich sind auch anderen Reihenfolgen oder Abfolgen bei der Durchführung der geeigneten Maßnahmen, wie Herausziehen der Bohrkrone und Änderung der Drehrichtung der Bohrkrone, möglich. Es ist ferner bevorzugt, dass auf ein Herausziehen der Bohrkrone aus dem Bohrloch ein durch die Vorschubvorrichtung bewirktes erneutes Einfahren der Bohrkrone in das Bohrloch hinein erfolgt. Dies bedeutet im Sinne der Erfindung bevorzugt, dass die Bohrkrone als Reaktion auf ein Herausfahren der Bohrkrone aus dem Bohrloch anschließend wieder in das Bohrloch hineingetrieben bzw. bewegt werden kann. Vorzugsweise kann das Hineinfahren der Bohrkrone mit dem Herausziehen der Bohrkrone aus dem Bohrloch und der Änderung der Bohrkronendrehrichtung abwechselnd oder in einer bestimmten, vorgegebenen Reihenfolge durchgeführt werden.

Das Herausziehen der Bohrkrone aus dem Bohrloch kann vorzugsweise ganz oder teilweise erfolgen. Das bedeutet im Sinne der Erfindung bevorzugt, dass die Bohrkrone vollständig bzw. im Wesentlichen vollständig aus dem Bohrloch herausgezogen werden kann, so dass sich die Bohrkrone anschließend nicht mehr im Bohrloch, sondern ausserhalb des Bohrlochs befindet. Es kann aber im Sinne der Erfindung ebenso bevorzugt sein, dass die Bohrkrone nur teilweise aus dem Bohrloch herausgezogen wird. Beispielsweise kann die Bohrkrone nur ein kurzes Wegstück aus dem Bohrloch herausgezogen werden, das beispielsweise gerade ausreichend lang sein kann, um die Bohrkrone aus ihrem verkanteten Zustand zu lösen bzw. die Blockade der Bohrkrone zu beseitigen. Vorzugsweise werden im Kontext der vorliegenden Erfindung die Begriffe «Lösen der Bohrkrone» und «Beseitigung der Blockade der Bohrkrone» synonym verwendet. Das bevorzugte abwechselnde Ausführen des Herausziehens der Bohrkrone aus dem Bohrloch und der Änderung der Drehrichtung der Bohrkrone kann im Sinne der Erfindung bedeuten, dass die Bohrkrone, wenn das Bohrsystem eine Blockade der Bohrkrone erkennt, durch die Vorschubvorrichtung für ein kurzes Wegstück aus dem Bohrloch herausgezogen wird. Anschließend kann die Drehrichtung der Bohrkrone geändert werden. Beispielsweise kann sich eine vormals im Uhrzeigersinn drehende Bohrkrone dadurch gegen den Uhrzeigersinn drehen, oder umgekehrt. Anschließend kann die Bohrkrone wieder in das Bohrloch hineingefahren werden. Ein solcher Zyklus kann beliebig oft wiederholt werden, insbesondere so lange, bis die Blockade der Bohrkrone gelöst ist. Vorzugsweise ermöglicht die Durchführung des vorgeschlagenen Verfahrens ein besonders wirksames Freirütteln der Bohrkrone, wobei das Freirütteln es insbesondere ermöglicht, dass der Nutzer des vorgeschlagenen Bohrsystems besonders schnell zu seiner eigentlichen Arbeit mit dem Bohrsystem zurückkehren kann. Dadurch kann die Arbeitseffizienz des vorgeschlagenen Bohrsystems im Vergleich zu konventionellen Systemen, die aus dem Stand der Technik bekannt sind, erheblich gesteigert werden.

Es ist im Sinne der Erfindung bevorzugt, dass die Vorschubvorrichtung eine automatische Vorschubvorrichtung oder eine von Hand betriebene Vorschubvorrichtung ist. Automatische Vorschubvorrichtungen sind aus dem Stand der Technik im Wesentlichen bekannt. Sie werden auch als Autofeed-Vorrichtung bezeichnet und sind vorzugsweise dazu eingerichtet, ein Kernbohrgerät bzw. das Werkzeug des Kernbohrgeräts, insbesondere die Bohrkrone, in einen zu bearbeitenden Untergrund hineinzutreiben. Automatische Vorschubvorrichtungen weisen den Vorteil auf, dass ein besonders gleichmäßiger Vorschub erreicht werden kann und dass der Nutzer sich nach Installation und Einstellung der automatischen Vorschubeinrichtung nicht mehr um den Vorschub kümmern muss. Es ist im Sinne der Erfindung bevorzugt, dass eine automatische Vorschubvorrichtung dazu in der Lage ist, die geeigneten Maßnahmen zum Lösen der Bohrkronenblockade automatisch zu ergreifen bzw. eine Reihenfolge für deren Durchführung selbsttätig festzulegen und umzusetzen. Die Entscheidung über die Durchführung der geeigneten Maßnahmen bzw. die Festlegung einer Reihenfolge kann vorzugsweise in Abhängigkeit von den zuvor ermittelten Systemparametern erfolgen. Dabei können Sensoren an der Vorschubvorrichtung und/oder am Kernbohrgerät Betriebsparameter oder Betriebskenngrößen erfassen, die dann beispielsweise von einer Steuereinrichtung an der Vorschubvorrichtung und/oder am Kernbohrgerät ausgewertet werden und als Grundlage für die automatische Durchführung der geeigneten Maßnahmen zum Lösen der Blockade der Bohrkrone verwendet werden können. Konkrete Ausführungsbeispiele der Erfindung werden in der Figurenbeschreibung beschrieben.

Im Stand der Technik sind auch handbetriebene Vorschubvorrichtungen bekannt. Dabei kann es sich beispielsweise um Handräder o.Ä. handeln. Die Verwendung einer manuell betriebenen Vorschubvorrichtung ist besonders energie- und ressourcensparend. Außerdem können der Vorschub bzw. die Vorschubkraft besonders einfach und genau auf die Erfordernisse des Bohrlochs bzw. des Untergrunds angepasst werden.

Es ist im Sinne der Erfindung bevorzugt, dass das Bohrsystem dazu eingerichtet ist, zu erkennen, ob eine Entlastung der Bohrkrone durch die Vorschubvorrichtung ausreichen wird, um die Blockade der Bohrkrone zu beseitigen. Der Begriff «Entlastung der Bohrkrone» bedeutet im Sinne der Erfindung bevorzugt, dass die Vorschubkraft, die von der Vorschubvorrichtung auf die Bohrkrone übertragen wird, verringert wird. Der Begriff kann vorzugsweise auch bedeuten, dass die Bohrkrone unter Verwendung einer Auszugskraft zumindest teilweise aus dem Bohrloch herausgezogen wird. Es ist im Sinne der Erfindung bevorzugt, dass die Beseitigung einer Blockade der Bohrkrone dadurch erkannt wird, dass das Kernbohrgerät kontinuierlich versucht, einen Drehzahl-Soll-Wert zu erreichen. Es wird im Kontext der vorliegenden Erfindung angenommen, dass eine Blockade der Bohrkrone gelöst ist, wenn eine Motordrehzahl einen vorgegebenen Grenzwert überschreitet. Bei Vorhandensein einer mechanischen Rutschkupplung ist es dafür ferner erforderlich, dass auch die Drehzahl des Getriebes einen vorgegebenen Grenzwert überschreitet.

In einer weiteren Ausgestaltung der Erfindung ist es bevorzugt, dass das Herausziehen der Bohrkrone aus dem Bohrloch durch eine Erhöhung der Auszugskraft bewirkt wird. Vorzugsweise ist die Vorschubeinrichtung dazu eingerichtet, die Bohrkrone als Werkzeug des Kernbohrgeräts tiefer bzw. weiter in das bestehende Bohrloch bzw. einen zu bearbeitenden Untergrund hineinzutreiben. Dies geschieht unter Verwendung einer Vorschubkraft, indem die Bohrkrone mit der Vorschubkraft in das Bohrloch bzw. in den Untergrund hineingepresst wird. Die Kraft, die beim Herausziehen der Bohrkrone aus dem Bohrloch verwendet wird, wird im Sinne der Erfindung bevorzugt «Auszugskraft» genannt. Mit der Auszugskraft kann die Bohrkrone ganz oder teilweise aus dem Bohrloch herausgezogen werden. Das Herausziehen erfolgt vorzugsweise unter Verwendung bzw. mit Hilfe der Vorschubvorrichtung, die eine Komponente des vorgeschlagenen Bohrsystems bildet.

Wenn das Herausziehen der Bohrkrone durch eine Erhöhung der Auszugskraft erfolgt, ist es im Sinne der Erfindung bevorzugt, dass die Erhöhung der Auszugskraft sprungartig erfolgt. Dieses sprung- oder ruckartige Herausziehen der Bohrkrone kann vorteilhafterweise zu einem Freirütteln der Bohrkrone innerhalb des Bohrlochs führen, wodurch sich die Blockade der Bohrkrone lösen kann.

Die Erfindung ermöglicht es vorteilhafterweise, dass mittels geeigneter Sensorik und Auswertung der System-Signale eine blockierte Bohrkrone erkannt werden kann. Die dafür vorgesehenen Sensoren können an der Vorschubvorrichtung und/oder am Kernbohrgerät des vorgeschlagenen Bohrsystems angeordnet vorliegen. Darüber hinaus ermöglicht es die Erfindung, dass erkannt werden kann, ob eine Entlastung des Bohrvorschubs ausreichen wird, um eine Blockierung der Bohrkrone zu beheben, oder ob eine Drehbewegung der Bohrkrone weiterhin nicht möglich ist. Wenn die Entlastung des Bohrvorschubs als nicht ausreichend beurteilt wird, kann die Blockade der Bohrkrone mit den vorgeschlagenen geeigneten Maßnahmen beseitigt werden. Beispielsweise kann eine Auszugskraft eines automatischen Bohrvorschubs in dem vorgeschlagenen Bohrsystem erhöht werden und/oder die Drehrichtung des Bohrgerätes umgekehrt werden. Es ist im Sinne der Erfindung besonders bevorzugt, dass die Erhöhung der Auszugskraft möglichst sprungartig bzw. ruckartig erfolgt. Darüber hinaus ist es im Sinne der Erfindung bevorzugt, dass die Drehbewegung des Drehantriebs am Bohrgerätes ähnlich einem Drehschlag geregelt wird.

Vorzugsweise kann der Bohrvorschub und/oder Drehantrieb wechselseitig oder in unterschiedlichen Kombinationen zur Beseitigung der Blockade der Bohrkrone betrieben werden. Beim Betrieb des Bohrsystems ohne automatische Bohrvorschubvorrichtung ist eine automatische Aktivierung der Drehrichtungsumkehr oder eine durch den Anwender initiierte Aktivierung der Drehrichtungsumkehr denkbar, um die Blockade der Bohrkrone zu lösen. Insbesondere, wenn das Bohrsystem mit einer automatischen Vorschubvorrichtung betrieben wird, kann eine hohe Anzahl von Durchläufern erreicht werden.

Darüber hinaus führt die Erfindung zu einer höheren Effizienz bei der Arbeit mit dem vorgeschlagenen Bohrsystem, da etwaige Blockierzeiten der Bohrkrone deutlich reduziert werden können. Ferner kann die Bohrkrone schneller gelöst werden als bei Verfahren, die aus dem Stand der Technik bekannt sind. Außerdem kann mit der Erfindung eine verbesserte Ergonomie für den Anwender ermöglicht werden, indem die Bohrkrone im Blockadefall quasi automatisch gelöst werden kann. Insbesondere kann der Aufwand für den Anwender im Blockadefall erheblich reduziert werden, da er keinen Gabelschlüssel mehr mit sich führen muss, der erforderlich ist, um eine Bohrkrone manuell zu drehen. Darüber hinaus ist auch kein spezielles Werkzeug zum Ausziehen der Bohrkrone erforderlich. Vorteilhafterweise ermöglicht die Erfindung auf diese Weise eine werkzeuglose Behebung der Blockade einer Bohrkrone in einem Kernbohrsystem.

Es ist im Sinne der Erfindung bevorzugt, dass ein Drehantrieb des Kernbohrgeräts mit einem bürstenlosen Motor (brushless, BL) umgesetzt wird. Vorzugsweise kann auch der Drehantrieb der Vorschubvorrichtung mit einem bürstenlosen Motor umgesetzt werden. Die Verwendung von bürstenlosen Motoren ist besonders vorteilhaft, weil bürstenlose Motoren eine Richtungsumkehr allein durch die Motoransteuerung ermöglichen. Mit anderen Worten kann die Richtungsumkehr bei einem bürstenlosen Motor vorteilhafterweise durch die Motoransteuerung bewirkt werden. Außerdem ermöglichen bürstenlose Motoren durch die Motoransteuerung ein impulsartiges Verhalten, so dass beispielsweise eine ruckartige Erhöhung der Auszugskraft bereitgestellt werden kann. Dadurch kann die Bohrkrone besonders effektiv aus zu dem Untergrund bzw. aus dem verkanteten Zustand im Bohrloch befreit werden.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

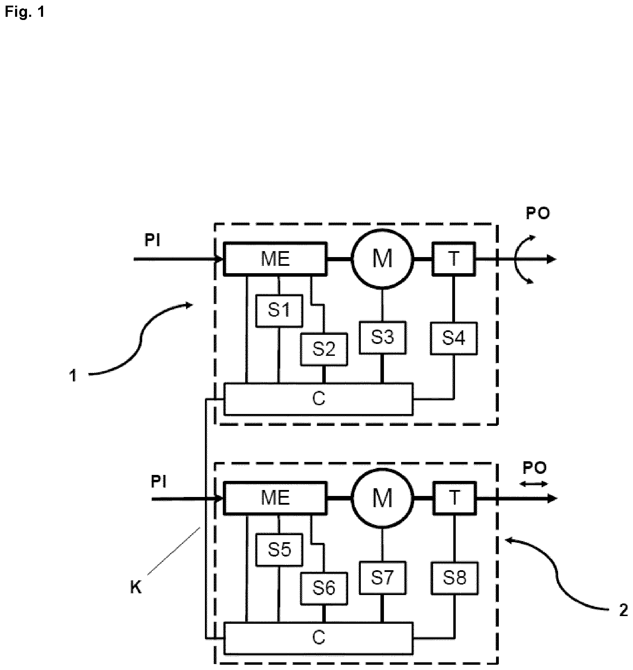

- Fig. 1: schematische Darstellung einer bevorzugten Ausgestaltung der Erfindung

### Ausführungsbeispiele und Figurenbeschreibung:

Figur 1 zeigt eine schematische Darstellung einer bevorzugten Ausgestaltung der Erfindung. Dargestellt ist eine bevorzugte Ausgestaltung des vorgeschlagenen Bohrsystems, wobei das Bohrsystem ein Kernbohrgerät (1, oben im Bild) und eine Vorschubvorrichtung (2, unten im Bild) umfasst. Das Kernbohrgerät (1) und die Vorschubvorrichtung (2) können mit einer Kommunikationsverbindung K miteinander verbunden vorliegen. Vorzugsweise ermöglicht die Kommunikationsverbindung K zwischen dem Kernbohrgerät (1) und der Vorschubvorrichtung (2) eine Kommunikation, d.h. einen Datenaustausch. Es ist im Sinne der Erfindung insbesondere bevorzugt, dass die Kommunikation bzw. der Daten- oder Befehlsaustausch zwischen dem Kernbohrgerät (1) und der Vorschubvorrichtung (2) zwischen den Steuerungsvorrichtungen C des Kernbohrgeräts (1) und der Vorschubvorrichtung (2) erfolgt, so wie in Fig. 1 dargestellt. Vorzugsweise kann die Steuereinrichtung des Kernbohrgeräts (1) als «erste Steuervorrichtung» bezeichnet werden, während die Steuereinrichtung der Vorschubvorrichtung (2) als «zweite Steuervorrichtung» bezeichnet werden kann. Es ist im Sinne der Erfindung bevorzugt, dass die Kommunikationsverbindung K zwischen der ersten Steuervorrichtung C des Kernbohrgeräts (1) und der zweiten Steuervorrichtung C der Vorschubvorrichtung (2) besteht.

Vorzugsweise umfassen sowohl das Kernbohrgerät (1), als auch die Vorschubvorrichtung (2) eine Motorelektronik ME, einen Motor M und ein Getriebe T, wobei diese Komponenten des Kernbohrgeräts (1) und der Vorschubvorrichtung (2) auf die dargestellte Weise miteinander verbunden vorliegen können. Bei den Motoren M kann es sich insbesondere um bürstenlose Motoren handeln. Vorzugsweise erfolgt die Leistungsaufnahme PI jeweils an der Motorelektronik ME, während die Leistungsausgabe PO am Getriebe T erfolgt. Bei der Leistungsausgabe PO des Kernbohrgeräts (1) werden insbesondere eine Drehgeschwindigkeit und ein Drehmoment abgegeben, während an der Leistungsausgabe PO der Vorschubvorrichtung (2) vorzugsweise eine Geschwindigkeit und eine Kraft ausgegeben werden. Bei der Drehgeschwindigkeit handelt es sich vorzugsweise um die Geschwindigkeit, mit der die Bohrkrone des Kernbohrgeräts (1) bewegt wird. Sie kann beispielsweise durch eine Angabe der Drehzahl beschrieben werden. Die Geschwindigkeit der Vorschubvorrichtung (2) ist vorzugsweise diejenige Geschwindigkeit, mit der die Vorschubvorrichtung (2) die Bohrkrone des Bohrgeräts in den zu bearbeitenden Untergrund hineintreibt. Die Kraft, die bei der Leistungsabgabe PO der Vorschubvorrichtung (2) umgesetzt wird, stellt vorzugsweise die Vorschubkraft dar, mit der die Bohrkrone in den Untergrund hineingetrieben werden kann.

Die Motorelektronik ME, der Motor M und das Getriebe T sind entweder direkt oder unterbrochen von einem Sensor mit der Steuereinrichtung C des Kernbohrgeräts (1) bzw. der Vorschubvorrichtung (2) verbunden. Der Begriff «direkte Verbindung» zwischen einer Komponente M, ME /oder T des Kernbohrgeräts (1) oder der Vorschubvorrichtung (2) und der entsprechenden Steuereinrichtung C bedeutet im Sinne der Erfindung bevorzugt, dass eine leitende oder Datenverbindung zwischen den Komponenten M, ME, T und der Steuervorrichtung C besteht, in der insbesondere kein Sensor vorliegt. Eine solche direkte Verbindung besteht in dem in Figur 1 dargestellten Ausführungsbeispiel der Erfindung insbesondere zwischen der Motorelektronik ME und der Steuereinrichtung C der Vorschubvorrichtung (2) und des Kernbohrgeräts (1). Es können jedoch auch solche Verbindungen zwischen Komponenten innerhalb eines Geräts bestehen, die mindestens einen Sensor S aufweisen. Beispielsweise können Sensoren S1 oder S5 zwischen der Motorelektronik ME und der Steuereinrichtung C der Vorschubvorrichtung (2) und des Kernbohrgeräts (1) angeordnet vorliegen. Die Sensoren S1 und S5 sind vorzugsweise zum Messen von Spannungen ausgestaltet; mit anderen Worten handelt es sich bei den Sensoren S1 und S5 vorzugsweise um Spannungssensoren. Darüber hinaus können Sensoren S2 und S6 zwischen der Motorelektronik ME und der Steuereinrichtung C der Vorschubvorrichtung (2) und des Kernbohrgeräts (1) angeordnet vorliegen. Die Sensoren S2 und S6 sind vorzugsweise zum Messen von Strömen bzw. Stromstärken ausgestaltet; mit anderen Worten handelt es sich bei den Sensoren S2 und S6 vorzugsweise um Sensoren zur Ermittlung einer Stromstärke. Zwischen dem Motor M und der Steuereinrichtung C können vorzugsweise die Sensoren S3 und S7 angeordnet vorliegen, die vorzugsweise zur Erfassung einer Motorgeschwindigkeit ausgebildet sind. Es ist im Sinne der Erfindung bevorzugt, dass die Geschwindigkeiten der Motoren M der Vorschubvorrichtung (2) und des Kernbohrgeräts (1) von den Sensoren S3 und S7 ermittelt und an die Steuereinrichtung C weitergeleitet werden. Dort können sie datentechnisch weiterverarbeitet und ausgewertet werden. Insbesondere können auf Grundlage der bei den Steuereinrichtungen C eingehenden Daten und Systemparametern Handlungs- oder Steuerbefehle für die Vorschubvorrichtung (2) und für das Kernbohrgerät (1) erstellt und an die entsprechenden Komponenten des Bohrsystems übermittelt werden. Die Sensoren S4 und S8 sind vorzugsweise zur Messung einer Getriebegeschwindigkeit eingerichtet. Sie liegen vorzugsweise zwischen der Steuereinrichtung C und dem Getriebe T des Kernbohrgeräts (1) und der Vorschubeinrichtung (2) vor.

Es ist im Sinne der Erfindung bevorzugt, dass die Sensoren S1 bis S8 die geeignete Sensorik zur Erfassung der Systemparameter darstellen. Mit anderen Worten sind die Sensoren S1 bis S8 dazu eingerichtet, die Systemparameter zu erfassen und beispielsweise an die Steuereinrichtungen C zur weiteren Verarbeitung und Auswertung weiterzuleiten.

Vorzugsweise kann die Vorschubvorrichtung (2) des vorgeschlagenen Bohrsystems eine automatische Vorschubvorrichtung (2a) oder eine von Hand betriebene Vorschubvorrichtung (2h) sein.

### Bezugszeichenliste

- 1: Kernbohrgerät
- 2: Vorschubvorrichtung 2a: automatische Vorschubvorrichtung 2h: handbetriebene Vorschubvorrichtung
- ME: Motorelektronik
- M: Motor
- T: Getriebe
- S1 ... S8: Sensoren S1 ... S8
- C: Steuerung / Steuervorrichtung
- PI: Leistungseingang
- PO: Leistungsausgangs
- K: Kommunikationsverbindung

## Patentansprüche

1. Bohrsystem, das ein Kernbohrgerät (1) mit einer Bohrkrone als Werkzeug zum Erzeugen eines Bohrlochs und eine Vorschubvorrichtung (2) umfasst,
**dadurch gekennzeichnet, dass**
das Bohrsystem Mittel zur Erfassung von Systemparametern umfasst, wobei das Bohrsystem ferner Mittel zur Auswertung der Systemparameter umfasst, so dass die Systemparameter zur Erkennung einer Blockade der Bohrkrone verwendbar sind, wobei eine Blockade der Bohrkrone durch eine oder mehrere der folgenden Maßnahmen beseitigt werden kann:
a) Herausziehen der Bohrkrone aus dem Bohrloch unter Aufbringung einer Auszugskraft durch die Vorschubvorrichtung (2),
b) Änderung einer Drehrichtung der Bohrkrone.

2. Bohrsystem nach Anspruch 1
**dadurch gekennzeichnet, dass**
die Vorschubvorrichtung (2) eine automatische Vorschubvorrichtung (2a) oder eine von Hand betriebene Vorschubvorrichtung (2h) ist.

3. Bohrsystem nach Anspruch 1 oder 2
**dadurch gekennzeichnet, dass**
das Bohrsystem dazu eingerichtet ist zu erkennen, ob eine Entlastung der Bohrkrone durch die Vorschubvorrichtung (2) ausreichen wird, um die Blockade der Bohrkrone zu beseitigen.

4. Bohrsystem nach einem der vorhergehenden Ansprüche
**dadurch gekennzeichnet, dass**
zwischen dem Kernbohrgerät (1) und der Vorschubvorrichtung (2) eine Kommunikationsverbindung K besteht.

5. Bohrsystem nach Anspruch 4
**dadurch gekennzeichnet, dass**
die Kommunikationsverbindung K zwischen einer ersten Steuervorrichtung C des Kernbohrgeräts (1) und einer zweiten Steuervorrichtung C der Vorschubvorrichtung (2) besteht.

6. Bohrsystem nach einem der vorhergehenden Ansprüche
**dadurch gekennzeichnet, dass**
die Motoren M des Kernbohrgeräts (1) und/oder der Vorschubvorrichtung (2) bürstenloste Motoren sind.

7. Verfahren zur Erkennung und Beseitigung einer Blockade einer Bohrkrone eines Kernbohrgeräts (1), wobei das Kernbohrgerät (1) eine Vorschubvorrichtung (2) umfasst, **gekennzeichnet durch die folgenden Verfahrensschritte:**
a) Erfassen von Systemparametern, wobei die Systemparameter einen Betrieb der Komponenten des Bohrsystems beschreiben,
b) Erkennen der Blockade der Bohrkrone durch Auswertung der Systemparameter,
c) Beseitigung der Blockade der Bohrkrone durch eine oder mehrere der folgenden Maßnahmen:
1) Herausziehen der Bohrkrone aus dem Bohrloch unter Aufbringung einer Auszugskraft durch die Vorschubvorrichtung (2),
2) Änderung einer Drehrichtung der Bohrkrone.

8. Verfahren nach Anspruch 7
**dadurch gekennzeichnet, dass**
auf das Herausziehen der Bohrkrone aus dem Bohrloch ein durch die Vorschubvorrichtung (2) bewirktes Einfahren der Bohrkrone in das Bohrloch hinein erfolgt.

9. Verfahren nach Anspruch 7 oder 8
**dadurch gekennzeichnet, dass**
das Herausziehen der Bohrkrone aus dem Bohrloch durch eine Erhöhung der Auszugskraft bewirkt wird.

10. Verfahren nach einem der Ansprüche 7 bis 9
**dadurch gekennzeichnet, dass**
die Erhöhung der Auszugskraft sprungartig erfolgt.

11. Verfahren nach einem der Ansprüche 7 bis 10
**dadurch gekennzeichnet, dass**
das Herausziehen der Bohrkrone und die Änderung der Drehrichtung der Bohrkrone zur Beseitigung der Blockade der Bohrkrone im Wesentlichen abwechselnd ausgeführt werden.
